# EUROPÄISCHE PATENTSCHRIFT

(11) **EP 2 832 478 B1**
(45) Veröffentlichungstag und Bekanntmachung des Hinweises auf die Patenterteilung: **30.12.2020**
(21) Anmeldenummer: 14177638.5
(22) Anmeldetag: 18.07.2014
(51) Int. Cl.: B23B 31/117, B23B 31/107

(54) **Verbindungssystem**
Connection system and intermediate bush and kit with an intermediate bush and a detent bolt for use in such a connection system
Système de connexion et douille intermédiaire et kit doté d'une douille intermédiaire et d'une vis d'arrêt destinée à être utilisée dans un tel système de connexion

(30) Priorität: 29.07.2013 DE 102013108105
(43) Veröffentlichungstag der Anmeldung: 04.02.2015
(73) Patentinhaber: Schunk GmbH & Co. KG Spann- und Greiftechnik, 74348 Lauffen am Neckar (DE)
(72) Erfinder: Retzbach, Thomas, 74357 Bönnighem (DE); Dessel, Raoul, 71543 Wüstenrot (DE); Sankal, Kadir, 71717 Beilstein (DE); Cantz, Nico, 74394 Hessigheim (DE)
(74) Vertreter: Albrecht, Ralf

(56) Entgegenhaltungen:
- DE-A1-102006 028 408
- DE-A1-102011 113 494
- DE-B3-102011 106 421
- FR-A- 1 523 777
- GB-A- 1 583 687
- JP-U- S58 196 014
- US-A- 2 695 787
- US-A- 3 556 540
- US-A- 4 330 923

## Beschreibung

Die vorliegende Erfindung betrifft ein Verbindungssystem zum lösbaren Verbinden zweier Bauteile mit einem zu spannenden Bauteil - insbesondere einem Werkzeug -, das einen zylindrischen Schaft aufweist, und einem Spannbauteil, das eine zylindrische Aufnahme umfasst, in welcher der zylindrische Schaft festgespannt werden kann, wobei die Außenfläche des zylindrischen Schafts wenigstens eine Ausnehmung aufweist, mit welcher ein Verriegelungselement in Eingriff gebracht werden kann, wobei in die zylindrische Aufnahme eine mit entlang des Umfangs gleichmäßig verteilt angeordneten, parallelen Längsschlitzen versehene Zwischenbüchse eingesetzt ist und der zylindrische Schaft in die Zwischenbüchse eingeschoben ist, wobei wenigstens ein Verriegelungselement in einer die Wandung der Zwischenbüchse durchsetzenden Durchgangsöffnung positioniert ist als eine radiale Durchgangsbohrung in der Wandung der Zwischenbüchse ausgebildet ist, und in Eingriff mit der Ausnehmung des zylindrischen Schafts steht, und wobei die Zwischenbüchse insbesondere an ihrem in die Aufnahme eingreifenden hinteren Endbereich Verbindungsmittel aufweist, über die sie formschlüssig mit dem Spannbauteil verbunden ist.

Verbindungssysteme dieser Art sind bekannt und werden insbesondere als Spannfutter oder Werkzeughalter an Werkzeugmaschinen eingesetzt, um den zylindrischen Schaft eines Werkzeuges wie beispielsweise eines Fräsers oder Bohrers an der entsprechenden Werkzeugmaschine zu befestigen. Die bekannten Spannfutter besitzen eine zentrale Aufnahme, in welcher der Werkzeugschaft eingesetzt und festgespannt werden kann. In einfachster Weise ist das Spannfutter als sogenanntes Warmschrumpffutter ausgebildet, welches im Bereich der Aufnahme erwärmt wird, um den Schaft eines zu spannenden Werkzeuges in die Aufnahme einsetzen zu können, und beim Abkühlen den eingesetzten Schaft durch Presssitz fixiert. Weiterhin sind Dehnspannfutter bekannt. Diese besitzen eine die Aufnahme definierende dünnwandige Dehnbüchse, welche von einem Druckraum umgeben ist, der hydraulisch beaufschlagbar ist, um die Dehnbüchse radial nach innen zu verformen und so ein in die Aufnahme eingesetztes Werkzeug zu spannen.

Die bekannten Verbindungssysteme haben sich in der Praxis durchaus bewährt. Es hat sich allerdings gezeigt, dass während der Bearbeitung und insbesondere beim Fräsen das Werkzeug durch zu hohe Bearbeitungskräfte aus der Aufnahme des Spannfutters gezogen wird, was zu Beschädigungen bis zu einer Zerstörung des Werkstückes führen kann.

Um dies zu vermeiden, sind bekannte Werkzeughalter, die auch als sogenannte Weldon-Werkzeughalter bezeichnet werden, zusätzlich mit einem Verriegelungselement versehen. Dieses ist in eine radial zu der Aufnahme verlaufende und in diese mündende Querbohrung eingeschraubt und kann in den Bereich der Aufnahme verstellt werden, um einen in die Aufnahme eingesteckten Werkzeugschaft zusätzlich mit Formschluss festzuklemmen und so gegen ein Herausziehen zu sichern. Dazu sind die Weldon-Werkzeugschäfte an einem Teil ihres Umfangs mit einer Abflachung versehen, an der das Verriegelungselement flächig in Anlage kommt.

Aus der DE 10 2006 028 408 A1 ist ein Verbindungssystem zum Lösen und Verbinden zweier Bauteile der eingangs genannten Art vorbekannt. Dieses umfasst einen Werkzeughalter, der eine zentrale Aufnahme definiert, in welcher ein Schaftfräser festgespannt werden kann. Die Fixierung des Schaftfräsers in dem Werkzeughalter erfolgt dabei mittelbar über eine Zwischenbüchse, welche in die Aufnahme des Werkzeughalters eingesetzt ist. Die Büchse wird in dem Werkzeughalter durch Gewindestifte fixiert, welche in einer die Wandung dazwischen Büchse radial durchsetzenden Durchgangsöffnung positioniert sind. Die Zwischenbüchse wiederum ist an ihrem in die Aufnahme eingreifender hinterer Endbereich formschlüssig mit dem zu spannenden Fräserschaft verbunden. Die Verbindung erfolgt hier über Kugeln, welche in radiale Durchgangsbohrungen in der Wandung der Zwischenbüchse eingesetzt sind und in korrespondierender Ausnehmungen des Fräserschaftes eingreifen.

Aufgabe der vorliegenden Erfindung ist es, ein Verbindungssystem der eingangs genannten Art so auszugestalten, dass eine sichere und einfache Handhabung gewährleistet ist.

Diese Aufgabe wird durch ein Verbindungssystem gemäß dem Patentanspruch 1 und durch ein Kit gemäß dem Patentanspruch 11 gelöst. Erfindungsgemäß wird die Aufgabe dadurch gelöst, dass die radiale Durchgangsbohrung derart platziert ist, dass sie im Bereich eines Längsschlitzes liegt, und insbesondere derart positioniert ist, dass der Längsschlitz die Durchgangsbohrung mittig teilt, und dass um die Durchgangsbohrung herum und konzentrisch zu dieser ein kreisbogenförmiger Schlitz ausgebildet ist, der die Wandung der Zwischenbüchse von außen nach innen durchsetzt, so dass zwischen dem kreisbogenförmigen Schlitz und der Durchgangsbohrung Federstege definiert werden, die elastisch nach außen gebogen werden, wenn das wenigstens eine Verriegelungselement in die Durchgangsbohrung von außen eingesetzt wird, um das Verriegelungselement in der Durchgangsbohrung durch die elastische Rückstellkraft der Federstege klemmend zu fixieren.

Der Erfindung liegt damit die Überlegung zugrunde, ein zu spannendes Bauteil, wie zum Beispiel ein Werkzeug in der Aufnahme einer Spanneinrichtung mittelbar über eine in die Aufnahme eingeschobene Zwischenbüchse zu fixieren. Zwischenbüchsen sind bekannt und werden in bekannten Spanneinrichtungen eingesetzt, um mit der Spanneinrichtung auch Werkzeuge zu spannen, die einen wesentlich kleineren Durchmesser als die Aufnahme der Spanneinrichtung besitzen. Diese Zwischenbüchsen besitzen einen zylindrischen Büchsenkörper mit einer zentralen Spannbohrung, wobei in dem Büchsenkörper mehrere die Wandung von Außenumfang zum Innenumfang durchgreifende und sich in Längsrichtung des Hülsenkörpers erstreckende Durchgangsschlitze ausgebildet sind. Diese Längsschlitze dienen dabei dazu, der Zwischenbüchse die erforderliche Elastizität zur Übertragung der Spannkräfte zu geben.

Dabei erfolgt die Fixierung des Werkzeuges in der Spannbohrung der Zwischenbüchse sowie die Fixierung der Zwischenbüchse in der Aufnahme nicht nur über die Spannwirkung der Spanneinrichtung selbst, sondern zusätzlich durch eine formschlüssige Verbindung zwischen dem Werkzeug und der Zwischenbüchse einerseits und der Zwischenbüchse und der Spanneinrichtung andererseits. Zur Herstellung der formschlüssigen Verbindung mit dem zu spannenden Bauteil ist in der Wandung der Zwischenbüchse eine radiale Durchgangsöffnung vorgesehen, durch welche von außen ein Verriegelungselement in Eingriff mit der Ausnehmung des zylindrischen Schaftabschnitts gebracht werden kann. Die Herstellung der formschlüssigen Verbindung erfolgt damit, bevor die Zwischenbüchse in die Aufnahme des Spannbauteils eingeschoben wird.

Bei dem Verriegelungselement kann es sich um eine Kugel handeln. In diesem Fall ist die Durchgangsöffnung als eine radiale Durchgangsbohrung in der Wandung der Zwischenbüchse mit einem zum Durchmesser der Kugel korrespondierenden Durchmesser ausgebildet. Außerdem ist die Wanddicke der Zwischenbüchse im Bereich der Durchgangsbüchse kleiner als der Durchmesser der Kugel, so dass die Kugel nicht vollständig in der Durchgangsbohrung aufgenommen werden kann. Auf diese Weise wird sichergestellt, dass die Kugel in Eingriff mit der Ausnehmung gedrückt wird, wenn die Zwischenbüchse in die Aufnahme des Spannbauteils eingeschoben wird und damit die Wandung der Aufnahme verhindert, dass die Kugel nach außen aus der Durchgangsbohrung austreten kann. Ebenso ist es möglich, anstelle einer Kugel mehrere und hier insbesondere genau zwei Kugeln in radialer Richtung hintereinanderliegend in die Durchgangsbohrung einzusetzen, die einen zum Durchmesser der Durchgangsbohrung korrespondierenden Durchmesser besitzen. In diesem Fall ist die Wanddicke der Zwischenbüchse im Bereich der Durchgangsbohrung kleiner als die Summe des Durchmessers der beiden Kugeln, so dass die Kugeln in den Innenraum der Zwischenbüchse vorstehen.

Alternativ kann das Verriegelungselement als Verriegelungsstift ausgebildet sein, der in die Durchgangsöffnung von außen eingebracht ist. Dabei kann der Verriegelungsstift in die Durchgangsöffnung von außen eingeschoben sein, wobei dann die Wandstärke der Zwischenbüchse im Bereich der Durchgangsöffnung kleiner ist als die des Verriegelungsstiftes. Auch hier ist die Länge des Verriegelungsstiftes so gewählt, dass der Verriegelungsstift in Eingriff mit der Ausnehmung gehalten wird, wenn die Zwischenbüchse in die Aufnahme des Spannbauteils eingeschoben ist und damit die Wandung der Aufnahme verhindert, dass der Verriegelungsstift nach außen aus der Durchgangsöffnung austreten kann.

Gemäß einer weiteren Ausführungsform ist die Durchgangsöffnung als Gewindebohrung ausgebildet, in welche ein Verriegelungselement in Form eines Gewindestiftes eingeschraubt ist.

Für den Fall, dass der Schaft als sogenannter Weldon-Schaft mit einer Weldon-Nut nach DIN 1835-1 ausgebildet ist, kann der mit der Ausnehmung in Eingriff kommende Endbereich des Verriegelungsstiftes eine zu der Weldon-Nut komplementäre Nut besitzen.

Gemäß der Erfindung ist dabei vorgesehen, dass die Durchgangsöffnung als eine radiale Durchgangsbohrung in der Wandung der Zwischenbüchse ausgebildet ist, wobei die radiale Durchgangsbohrung derart platziert ist, dass sie im Bereich eines Längsschlitzes liegt, und insbesondere derart positioniert ist, dass der Längsschlitz die Durchgangsbohrung mittig teilt, und dass um die Durchgangsbohrung herum und konzentrisch zu dieser ein kreisbogenförmiger Schlitz ausgebildet ist, der die Wandung der Zwischenbüchse von außen nach innen durchsetzt, so dass zwischen dem kreisbogenförmigen Schlitz und der Durchgangsbohrung Federstege definiert werden, die elastisch nach außen gebogen werden, wenn das wenigstens eine Verriegelungselement in die Durchgangsbohrung von außen eingesetzt wird, um das Verriegelungselement in der Durchgangsbohrung durch die elastische Rückstellkraft der Federstege klemmend zu fixieren. Zweckmäßigerweise erstreckt sich der kreisbogenförmige Schlitz über im Wesentlichen den gesamten Umfang der Durchgangsbohrung, wobei zwischen dem Längsschlitz, in dessen Bereich die Durchgangsbohrung angeordnet ist, und den in Umfangsrichtung des kreisbogenförmigen Schlitzes liegenden Enden des kreisbogenförmigen Schlitzes an der zur Vorderseite weisenden Seite der Zwischenbüchse Materialstege verbleiben. Diese Ausgestaltung erlaubt es, kugelförmige oder stiftförmige Verriegelungselemente, welche in die Durchgangsbohrung eingeschoben sind, klemmend zu fixieren, so dass diese nach dem Einbringen in die Durchgangsbohrung nicht mehr aus dieser herausfallen können. Hierdurch wird die Montage bzw. auch ein Transport erleichtert.

Die formschlüssige Verbindung zwischen dem Spannbauteil und der Zwischenbüchse erfolgt erfindungsgemäß vorzugsweise durch eine Arretierschraube, welche in eine die Wandung des Spannbauteils insbesondere radial durchsetzende Gewindebohrung eingeschraubt ist und in eine Vertiefung eingreift, die in einem hinteren Endbereich der Zwischenbüchse in deren äußeren Umfangsfläche vorgesehen ist. Dabei kann der mit der Vertiefung der Zwischenbüchse in Eingriff kommende innere Endabschnitt der Arretierschraube spitz zulaufend ausgebildet sein. Alternativ können die Vertiefungen der Zwischenbüchse und der damit in Eingriff kommende Endabschnitt der Arretierschraube derart komplementär ausgebildet sein, dass die Zwischenbüchse in der Aufnahme durch in Eingriff zwischen der Arretierschraube und der Vertiefung axial positioniert wird. Dies kann erreicht werden, indem der Endabschnitt der Arretierschraube an einer vorderen und einer hinteren Seitenflanke der Nut in Anlage kommt.

Die Vertiefung kann in Form einer Ringnut ausgebildet sein, die sich entlang des Umfangs der Zwischenbüchse erstreckt. Alternativ ist es möglich, die Vertiefung nur lokal in einem Teilabschnitt des Umfangs der Zwischenbüchse auszubilden. In diesem Fall kann die Vertiefung insbesondere komplementär zu dem mit der Vertiefung in Eingriff kommenden Endabschnitt der Arretierschraube ausgebildet sein. Zweckmäßigerweise kann dann die Vertiefung der damit in Eingriff kommende Endabschnitt der Arretierschraube einen kreisrunden Querschnitt besitzen. Durch die komplementäre Ausbildung wird die Zwischenbüchse nicht nur axial in der Aufnahme positioniert, sondern auch gegen ein Verdrehen gesichert.

Die erfindungsgemäße Sicherung des zu spannenden Bauteils kann in einfacher Weise auch bei bestehenden Spanneinrichtungen nachgerüstet werden. Hierzu ist es lediglich erforderlich, eine Spannbüchse bzw. Zwischenbüchse zu verwenden, die mit einer Durchgangsöffnung für das Verriegelungselement und an ihrem hinteren, für die Anbringung in die Aufnahme des Spannwerkzeuges bestimmten Endbereich eine Vertiefung für den Eingriff einer Arretierschraube aufweist. Des Weiteren muss eine Gewindebohrung in die Wandung des Spannbauteils der Spanneinrichtung eingebracht werden, durch welche die Arretierschraube in die Aufnahme eingedreht werden kann.

Im Betrieb wird zunächst ein Schaftwerkzeug, das mit einer entsprechenden Ausnehmung in seiner Wandung versehen ist, d.h. einen sogenannten Weldon-Werkzeugschaft besitzt, in eine derartige Zwischenbüchse eingesetzt und darin formschlüssig gesichert, indem das Verrriegelungselement von außen in die Durchgangsöffnung eingebracht wird, bis es in die Ausnehmung eingreift, welche im Bereich der Durchgangsöffnung positioniert ist. Anschließend wird die Zwischenbüchse in die Aufnahme des Spannbauteils eingeschoben, wodurch das Verriegelungselement in der Aufnahme gesichert wird, da es durch die die Aufnahme begrenzende Wandung des Spannbauteils an einem Ausweichen nach außen gehindert wird. Abschließend wird die Arretierschraube in die Aufnahme eingedreht, bis sie in Eingriff mit der Vertiefung der Zwischenbüchse kommt, so dass diese axial und ggf. auch in Umfangsrichtung in der Aufnahme gesichert wird. Nun kann die kraftschlüssige Verbindung in üblicher Weise hergestellt werden.

In an sich bekannter Weise kann das Spannbauteil bzw. die Spanneinrichtung Spannmittel aufweisen, um ein Bauteil in der Aufnahme zu fixieren. Die Spannmittel definieren dann einen Spannbereich, in dem sie wirksam sind. In diesem Fall mündet die Gewindebohrung, durch welche die Arretierschraube in die Aufnahme eingedreht werden kann, vorzugsweise in den axial hinteren Endbereich der Aufnahme, der zwischen dem Spannbereich und der hinteren Stirnfläche der Aufnahme liegt. Beispielsweise kann die Spanneinrichtung als Hydrodehnspannfutter ausgebildet sein. In diesem Fall ist in dem Grundkörper eine Dehnbüchse vorgesehen, die über ihre Länge zumindest einen axialen Abschnitt der Aufnahme definiert und von einer Druckkammer umgeben wird, in welcher ein Druck aufgebaut werden kann, um die Dehnbüchse in einem den Spannbereich definierenden dünnen Wandabschnitt nach innen zu verformen. Bei einer solchen Ausgestaltung mündet die Gewindebohrung in die Aufnahme in dem axialen Endbereich der Aufnahme, der zwischen der Dehnbüchse und der axial inneren Endwand der Aufnahme liegt.

Hinsichtlich weiterer vorteilhafter Ausgestaltungen der Erfindung wird auf die Unteransprüche sowie nachfolgende Beschreibung von Ausführungsbeispielen unter Bezugnahme auf die beiliegende Zeichnung verwiesen. In der Zeichnung zeigt:
- Figur 1: eine erste Ausführungsform eines Verbindungssystems gemäß der vorliegenden Erfindung im Längsschnitt,
- Figur 2: eine zweite Ausführungsform eines erfindungsgemäßen Verbindungssystems im Längsschnitt, wobei nur die obere Hälfte gezeigt ist,
- Figur 3: eine dritte Ausführungsform eines Verbindungssystems gemäß der vorliegenden Erfindung im Längsschnitt, wobei nur die untere Hälfte dargestellt ist,
- Figur 4: eine Zwischenbüchse für ein erfindungsgemäßes Verbindungssystem im Längsschnitt,
- Figur 5: die Zwischenbüchse aus Figur 4 in Draufsicht,
- Figur 6: den Ausschnitt Z aus Figur 5 in vergrößerter Darstellung,
- Figur 7: eine weitere Ausführungsform einer Zwischenbüchse mit einem zu spannenden Schaft in Vorderansicht,
- Figur 8: die Zwischenbüchse aus Figur 7 mit gespanntem Schaft im Längsschnitt, und
- Figur 9: die Zwischenbüchse aus Figur 8 in Draufsicht.

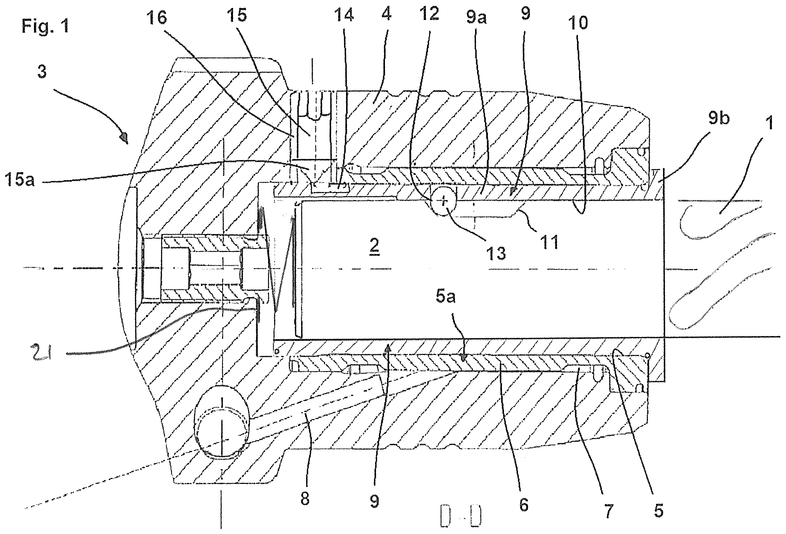

In der Figur 1 ist eine erste Ausführungsform eines Verbindungssystems zum lösbaren Verbinden zweier Bauteile gemäß der vorliegenden Erfindung dargestellt. Das Verbindungssystem umfasst ein zu spannendes Bauteil 1, das hier in Form eines Fräswerkzeuges dargestellt ist und einen zylindrischen Schaft 2 aufweist, und ein Spannbauteil 3, das hier in Form eines Dehnspannfutters ausgebildet ist. Das Dehnspannfutter 3 besitzt einen Grundkörper 4 aus einem formsteifen Material, der an seinem in der Zeichnung nicht dargestellten linken Endbereich in an sich bekannter Weise einen Befestigungskonus zur Einspannung an einer Arbeitsspindel aufweist. An dem gegenüberliegenden axialen Ende ist in dem Grundkörper 4 eine zentrale Aufnahme 5 ausgebildet. Diese wird über einen axialen Teilabschnitt 5a - den Spannbereich - außenseitig von einer dünnwandigen Dehnbüchse 6 begrenzt, die an ihren axialen Enden mit dem Grundkörper 4 verlötet ist. Die Dehnbüchse 6 ist von einer Druckkammer 7 umgeben. Diese ist mit einem Hydraulikmittel wie beispielsweise Öl befüllt und steht über einen im Grundkörper 4 ausgebildeten Kanal 8 mit einer Hydraulikmittelquelle in Verbindung, durch die sie zum Spannen eines Bauteils mit Druck beaufschlagt werden kann, so dass sie nach innen elastisch verformt wird.

In die zylindrische Aufnahme 5 ist eine Zwischenbüchse 9 eingesetzt, die eine Spannbohrung 10 definiert, in welche der zylindrische Schaft 2 des Fräswerkzeuges 1 eingeschoben ist. Der zylindrische Schaft 2 ist nach Art eines Weldon-Schaftes ausgebildet und weist in seiner Außenfläche wenigstens eine Ausnehmung 11 auf. Die Zwischenbüchse 9 besitzt einen Büchsenkörper 9a, der im Wesentlichen zylindrisch ausgebildet ist, und an seinem vorderen Ende einen radial nach außen vorstehenden Flansch 9b trägt, der eine axiale Anschlagfläche bildet, über welche die Zwischenbüchse 9 axial in der Aufnahme 5 positioniert wird. In der Figur 1 nicht erkennbar ist, dass in dem Büchsenkörper 9a mehrere gleichmäßig entlang des Umfangs verteilt angeordnete, parallel zueinander positionierte axiale Längsschlitze 17 ausgebildet sind. Ferner ist in der Wandung des Büchsenkörpers 9a eine radiale Durchgangsbohrung 12 vorgesehen, welche so positioniert ist, dass sie der Ausnehmung 11 des zylindrischen Schafts 2 gegenüberliegt. In die Durchgangsbohrung 12 ist ein Verriegelungselement in Form einer Kugel 13 eingebracht, die einen zu dem Durchmesser der Durchgangsbohrung 12 korrespondierenden Durchmesser besitzt, wobei die Wandstärke der Zwischenbüchse 9 im Bereich der Durchgangsbohrung 12 kleiner ist als der Durchmesser der Kugel 13, so dass die Kugel 13 in die Ausnehmung 11 des zylindrischen Schafts 2 eingreift, um auf diese Weise den zylindrischen Schaft 2 formschlüssig in der Zwischenbüchse 9 zu sichern.

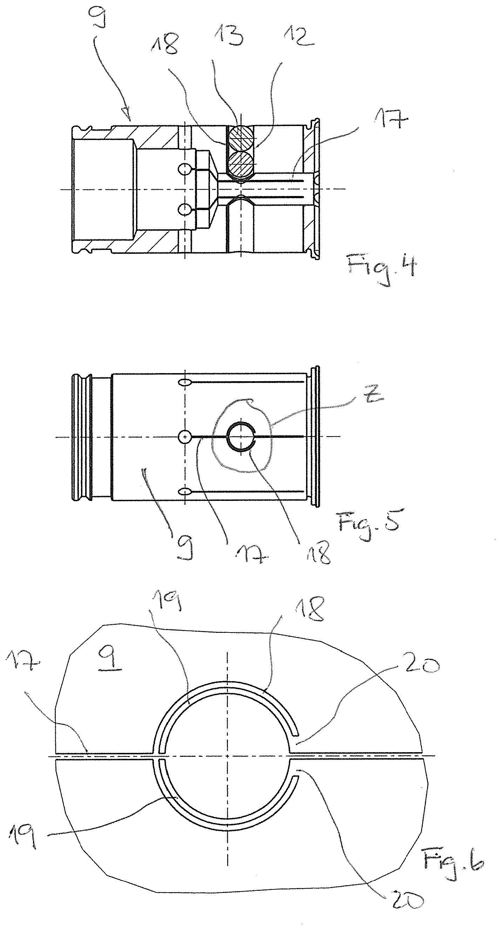

Alternativ ist es möglich, in die radiale Durchgangsbohrung 12 auch mehrere Kugeln 13 radial hintereinanderliegend anzuordnen, wenn die Zwischenbüchse 9 eine entsprechend große Wandstärke besitzt. Eine derartige Ausgestaltung ist in den Figuren 4 bis 6 dargestellt. Bei dieser Ausführungsform ist die radiale Durchgangsbohrung 12 derart platziert, dass sie im Bereich eines der Längsschlitze 17 liegt und der Längsschlitz 17 die Durchgangsbohrung 12 mittig teilt. Um die Durchgangsbohrung 12 herum und konzentrisch zu dieser ist ein kreisbogenförmiger Schlitz 18 ausgebildet, der die Wandung der Zwischenbüchse 9 von außen nach innen durchsetzt, so dass zwischen dem kreisbogenförmigen Schlitz 18 und der Durchgangsbohrung 12 zwei Federstege 19 definiert werden. Die Anordnung ist dabei so getroffen, dass sich der kreisbogenförmige Schlitz 18 über im Wesentlichen den gesamten Umfang der Durchgangsbohrung 12 erstreckt, wobei zwischen dem Längsschlitz 17 und den in Umfangsrichtung des kreisbogenförmigen Schlitzes 18 gegenüberliegenden Enden des kreisbogenförmigen Schlitzes 18 an der zur Vorderseite weisenden Seite der Zwischenbüchse 9 Materialstege 20 verbleiben. Die Anordnung ist dabei so getroffen, dass die Federstege 19 elastisch nach außen gebogen werden, wenn die Kugeln 13 in die Durchgangsbohrung 12 von außen eingesetzt werden, um die Kugeln 13 der Durchgangsbohrung 12 durch die elastische Rückstellkraft der Federstege 19 klemmend zu fixieren. Ebenso können, wie in Figur 4 angedeutet ist, mehrere Durchgangsbohrungen 12 zur Aufnahme von Verriegelungselementen 13 vorgesehen sein. Diese sind dann bevorzugt gleichmäßig entlang des Umfangs der Zwischenbüchse 9 verteilt angeordnet.

Insbesondere am in die Aufnahme 5 ragenden hinteren Endbereich der Zwischenbüchse 9 ist in der Umfangswandung des Büchsenkörpers 9a eine Vertiefung 14 vorgesehen, in welche eine Arretierschraube 15 eingreift, die in eine die Wandung des Grundkörpers 4 radial durchsetzende Gewindebohrung 16 eingeschraubt ist. Auf diese Weise wird die Zwischenbüchse 9 in der Aufnahme 5 des Grundkörpers 4 formschlüssig gesichert.

In der in Figur 1 dargestellten Ausführungsform ist der mit der Vertiefung 14 der Zwischenbüchse 9 in Eingriff kommende Endabschnitt 15a der Arretierschraube 15 spitz zulaufend ausgebildet. Damit kann der Endabschnitt immer in Kontakt mit der axial innenliegenden oder hinteren Kante der Vertiefung 14 in Eingriff gebracht werden.

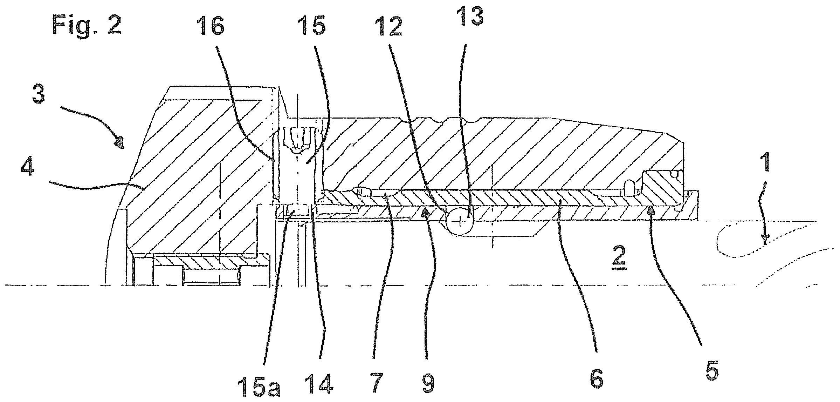

Alternativ kann der Endabschnitt 15a auch in Form eines kreisrunden Kopfes ausgebildet sein, wie dies in Figur 2 dargestellt ist. In diesem Fall besitzt die Vertiefung 14 eine komplementäre Form, so dass die Zwischenbüchse 9 durch den in Eingriff mit der Arretierschraube 15 sowohl in axialer Richtung, als auch in Umfangsrichtung gesichert ist.

In der Figur 1 ist schließlich erkennbar, dass in die Aufnahme 5 eine Druckfeder 21 eingesetzt ist, an welcher sich der Schaft 2 abstützt, so dass dieser nach außen gedrückt wird mit der Folge, dass die Ausnehmung 11 und das Verriegelungselement 13 hier in Form der Kugel in Anlage gehalten werden.

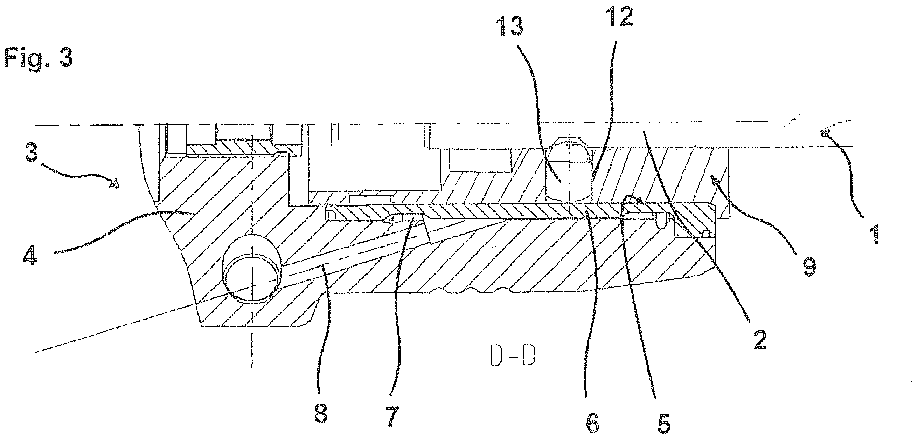

Bei der in Figur 3 dargestellten Ausführungsform wird anstelle einer Kugel ein Verriegelungsstift 13 zur Sicherung des Werkzeuges eingesetzt. Der Verriegelungsstift 13 ist in eine Durchgangsbohrung 12 in der Wandung des Büchsenkörpers 9a eingeschoben und besitzt eine Länge, die größer ist als die Dicke der Wandung des Büchsenkörpers 9a im Bereich der Durchgangsbohrung 12. Auf diese Weise wird ein Eingriff des Verriegelungsstiftes 13 in die Ausnehmung 11 des Werkzeugschaftes 2 sichergestellt.

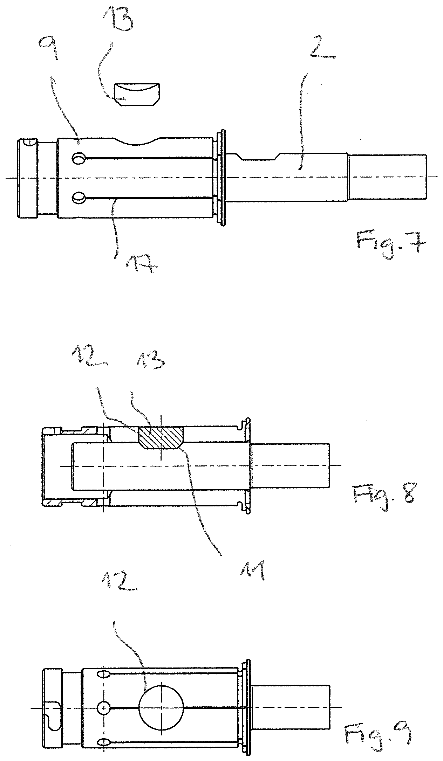

Wie in den Figuren 7 bis 9 dargestellt ist, kann der Verriegelungsstift 13, wenn der zu spannende Schaft mit einer Weldon-Nut als Ausnehmung 11 versehen ist, der mit der Ausnehmung 11 in Eingriff kommende Endbereich des Arretierstiftes 13 eine zu der Weldon-Nut komplementäre Kontur besitzen. Ebenso ist insbesondere in der Figur 7 erkennbar, dass die Außenseite des Verriegelungsstiftes 13 abgerundet ist und damit eine an die Außenkontur der Zwischenbüchse 9 angepasste Kontur besitzt.

## Patentansprüche

1. Verbindungssystem zum lösbaren Verbinden zweier Bauteile mit einem zu spannenden Bauteil (1) - insbesondere einem Werkzeug -, das einen zylindrischen Schaft (2) aufweist, und einem Spannbauteil (3), das eine zylindrische Aufnahme (5) umfasst, in welcher der zylindrische Schaft (2) festgespannt werden kann, wobei die Außenfläche des zylindrischen Schafts (2) wenigstens eine Ausnehmung (11) aufweist, mit welcher ein Verriegelungselement (13) in Eingriff gebracht werden kann, wobei in die zylindrische Aufnahme (5) eine mit entlang des Umfangs gleichmäßig verteilt angeordneten, parallelen Längsschlitzen versehene Zwischenbüchse (9) des Verbindungssystems eingesetzt ist und
der zylindrische Schaft (2) in die Zwischenbüchse (9) eingeschoben ist, wobei wenigstens ein Verriegelungselement (13) in einer die Wandung der Zwischenbüchse (9) durchsetzenden Durchgangsöffnung positioniert ist, die als eine radiale Durchgangsbohrung (12) in der Wandung der Zwischenbüchse (9) ausgebildet ist, und in Eingriff mit der Ausnehmung (11) des zylindrischen Schafts (2) steht, und wobei die Zwischenbüchse (9) insbesondere an ihrem in die Aufnahme (5) eingreifenden hinteren Endbereich Verbindungsmittel (15) aufweist, über die sie formschlüssig mit dem Spannbauteil (3) verbunden ist, **dadurch gekennzeichnet,**
**dass** die radiale Durchgangsbohrung (12) derart platziert ist, dass sie im Bereich eines Längsschlitzes liegt, und insbesondere derart positioniert ist, dass der Längsschlitz (17) die Durchgangsbohrung (12) mittig teilt, und
**dass** um die Durchgangsbohrung (12) herum und konzentrisch zu dieser ein kreisbogenförmiger Schlitz (18) ausgebildet ist, der die Wandung der Zwischenbüchse (9) von außen nach innen durchsetzt, so dass zwischen dem kreisbogenförmigen Schlitz (18) und der Durchgangsbohrung (12) Federstege (19) definiert werden, die elastisch nach außen gebogen werden, wenn das wenigstens eine Verriegelungselement (13) in die Durchgangsbohrung (12) von außen eingesetzt wird, um das Verriegelungselement (13) in der Durchgangsbohrung (12) durch die elastische Rückstellkraft der Federstege (19) klemmend zu fixieren.

2. Verbindungssystem nach Anspruch 1, **dadurch gekennzeichnet, dass** sich der kreisbogenförmige Schlitz (18) über im Wesentlichen den gesamten Umfang der Durchgangsbohrung (12) erstreckt, wobei zwischen dem Längsschlitz (17), in dessen Bereich die Durchgangsbohrung (12) angeordnet ist, und den in Umfangsrichtung des kreisbogenförmigen Schlitzes (18) liegenden Enden des kreisbogenförmigen Schlitzes (18) an der zur Vorderseite weisenden Seite der Zwischenbüchse (9) Materialstege (20) verbleiben.

3. Verbindungssystem nach Anspruch 1 oder 2, **dadurch gekennzeichnet, dass** an ihrem in die Aufnahme (5) eingreifenden hinteren Endbereich in der Umfangsfläche eine Vertiefung (14) als Verbindungsmittel aufweist, in welche eine Arretierschraube (15) eingreift, die in eine die Wandung des Spannbauteils (3) insbesondere radial durchsetzende Gewindebohrung (16) eingeschraubt ist.

4. Verbindungssystem nach einem der vorhergehenden Ansprüche, **dadurch gekennzeichnet, dass** das wenigstens eine Verriegelungselement (13) eine Kugel (13) ist und die Durchgangsöffnung als eine radiale Durchgangsbohrung (12) in der Wandung der Zwischenbüchse (9) mit einem zum Durchmesser der Kugel (13) korrespondierenden Durchmesser ausgebildet ist, wobei die Wanddicke der Zwischenbüchse (9) im Bereich der Durchgangsbohrung (12) kleiner ist als der Durchmesser der Kugel (13), oder dass die Durchgangsöffnung als radiale Durchgangsbohrung (12) in der Wandung der Zwischenbüchse (9) ausgebildet ist, in die in radialer Richtung hintereinanderliegend zwei Kugeln (13) als Verriegelungselemente eingesetzt sind, die einen zum Durchmesser der Durchgangsbohrung (12) korrespondierenden Durchmesser besitzen, wobei die Wanddicke der Zwischenbüchse (9) im Bereich der Durchgangsbohrung (12) kleiner ist als die Summe des Durchmessers der beiden Kugeln (13).

5. Verbindungssystem nach einem der Ansprüche 1 bis 3, **dadurch gekennzeichnet, dass** das Verriegelungselement (13) als Verriegelungsstift ausgebildet ist, der in die radiale Durchgangsöffnung von außen eingebracht ist.

6. Verbindungssystem nach Anspruch 5, **dadurch gekennzeichnet, dass** der Verriegelungsstift (13) in die Durchgangsöffnung von außen eingeschoben ist und die Wandstärke der Zwischenbüchse (9) im Bereich der Durchgangsöffnung kleiner ist als die Länge des Verriegelungsstiftes, oder die Durchgangsöffnung als Gewindebohrung ausgebildet ist, in welche ein Verriegelungselement in Form eines Gewindestiftes eingeschraubt ist.

7. Verbindungssystem nach Anspruch 5 oder 6, **dadurch gekennzeichnet, dass** die Ausnehmung (11) des Schafts eine Weldon-Nut nach DIN 1835-1 ist und der mit der Ausnehmung (11) in Eingriff kommende Endbereich des Verriegelungsstiftes (13) eine zu der Weldon-Nut komplementäre Kontur besitzt.

8. Verbindungssystem nach einem der vorherigen Ansprüche, **dadurch gekennzeichnet, dass** der mit der Vertiefung (14) der Zwischenbüchse (9) in Eingriff kommende Endabschnitt (15a) der Arretierschraube (15) spitz zulaufend ausgebildet ist und/oder die Vertiefung (14) der Zwischenbüchse (9), in welche die Arretierschraube (15) eingreift, als eine Ringnut ausgebildet ist, die sich entlang des Umfangs der Zwischenbüchse (9) erstreckt.

9. Verbindungssystem nach einem der vorherigen Ansprüche, **dadurch gekennzeichnet, dass** die Vertiefung (14) derart komplementär zu dem mit ihr in Eingriff kommenden Endabschnitt (15a) der Arretierschraube (15) ausgebildet ist, dass die Zwischenbüchse (9) in der Aufnahme (5) durch den Eingriff zwischen der Arretierschraube (15) und der Vertiefung (14) axial positioniert wird.

10. Verbindungssystem nach einem der Ansprüche 1 bis 7, **dadurch gekennzeichnet, dass** die Vertiefung (14) lokal an einem Teilabschnitt des Umfangs der Zwischenbüchse (9) und komplementär zu dem mit der Vertiefung (14) in Eingriff kommenden Endabschnitt (15a) der Arretierschraube (15) ausgebildet ist, wobei die Vertiefung (14) und der damit ein Eingriff kommende Endabschnitt (15a) der Arretierschraube (15) insbesondere einen kreisrunden Querschnitt besitzen.

11. Kit zur Verwendung in einem Verbindungssystem nach einem der vorherigen Ansprüche mit einer Zwischenbüchse (9) und einer Arretierschraube (15),
**dadurch gekennzeichnet, dass** in einem Büchsenkörper (9a) der Zwischenbüchse eine die Wandung radial durchsetzende Durchgangsöffnung (12) und an dem für die Einbringung in eine Aufnahme eines Spannwerkzeuges bestimmten hinteren Endbereich des Büchsenkörpers (9a) Verbindungsmittel (14) zur Herstellung einer formschlüssigen Verbindung mit einem Spannbauteil (3) ausgebildet sind, die eine Vertiefung (14) für den Eingriff der Arretierschraube (15) aufweisen, wobei insbesondere die Vertiefung (14) als eine Ringnut ausgebildet ist, die sich entlang des Umfangs des zylindrischen Schafts (2) erstreckt, dass die Vertiefung (14) der Zwischenbüchse (9) derart komplementär zu dem mit ihr in Eingriff kommenden Endabschnitt (15a) der Arretierschraube (15) ausgebildet ist, dass die Zwischenbüchse (9) in einer Aufnahme (5) durch den Eingriff zwischen der Arretierschraube (15) und der Vertiefung (14) axial positioniert wird, dass die Zwischenbüchse (9) mehrere entlang des Umfangs gleichmäßig verteilt angeordnete, parallele Längsschlitze (17) aufweist, und die Durchgangsöffnung (12) als eine radiale Durchgangsbohrung in der Wandung der Zwischenbüchse (9) ausgebildet ist, wobei die radiale Durchgangsbohrung (12) derart platziert ist, dass sie im Bereich eines Längsschlitzes (17) liegt, und insbesondere derart positioniert ist, dass der Längsschlitz (17) die Durchgangsbohrung (12) mittig teilt, und dass um die Durchgangsbohrung (12) herum und konzentrisch zu dieser ein kreisbogenförmiger Schlitz (18) ausgebildet ist, der die Wandung der Zwischenbüchse (9) von außen nach innen durchsetzt, so dass zwischen dem kreisbogenförmigen Schlitz (18) und der Durchgangsbohrung (12) Federstege (19) definiert werden, die elastisch nach außen gebogen werden, wenn ein Verriegelungselement (13) in die Durchgangsbohrung (12) von außen eingesetzt wird, um das Verriegelungselement (13) in der Durchgangsbohrung (12) durch die elastische Rückstellkraft der Federstege (19) klemmend zu fixieren.

12. Kit nach Anspruch 11, **dadurch gekennzeichnet, dass** die Vertiefung (14) lokal an einem Teilabschnitt des Umfangs der Zwischenbüchse (9) und komplementär zu dem mit der Vertiefung (14) in Eingriff kommenden Endabschnitt (15a) der Arretierschraube (15) ausgebildet ist, wobei die Vertiefung (14) und der damit in Eingriff kommende Endabschnitt (15a) der Arretierschraube (15) insbesondere einen kreisrunden Querschnitt besitzen.

## Claims

1. Connection system for releasably connecting two components to a component (1) to be clamped - in particular a tool - having a cylindrical shaft (2), and a clamping component (3) comprising a cylindrical receptacle (5), in which the cylindrical shaft (2) can be clamped, the outer surface of the cylindrical shaft (2) having at least one recess (11) with which a locking element (13) can be brought into engagement, wherein an intermediate sleeve (9) of the connection system provided with parallel longitudinal slots uniformly distributed along the circumference is inserted into the cylindrical receptacle (5) and the cylindrical shaft (2) is inserted into the intermediate sleeve (9), wherein at least one locking element (13) is positioned in a passage opening passing through the wall of the intermediate sleeve (9), which is formed as a radial through-hole (12) in the wall of the intermediate sleeve (9), and is in engagement with the recess (11) of the cylindrical shaft (2), and wherein the intermediate sleeve (9) has, in particular at its rear end region engaging in the receptacle (5), connecting means (15) by means of which it is positively connected to the clamping component (3), **characterized in that** the radial through-hole (12) is placed in such a way, that it lies in the region of a longitudinal slot, and is positioned in particular in such a way that the longitudinal slot (17) centrally divides the through-hole (12), and **in that** a circular-arc-shaped slot (18) is formed around and concentrically with the through-hole (12), which passes through the wall of the intermediate sleeve (9) from the outside inwardly so that spring bars (19) are defined between the circular-arc-shaped slot (18) and the trough-hole (12), which spring bars (19) are elastically bent outwards when the at least one locking element (13) is inserted into the through-hole (12) from the outside in order to fix the locking element (13) in the through-hole (12) in a clamping manner by the elastic restoring force of the spring bars (19).

2. Connection system according to claim 1, **characterized in that** the circular-arc-shaped slot (18) extends over substantially the entire circumference of the through-hole (12), wherein material bars (20) remain between the longitudinal slot (17), in the region of which the trough-hole (12) is arranged, and the ends of the circular-arc-shaped slot (18) lying in the circumferential direction of the circular-arc-shaped-slot (18) on the side of the intermediate sleeve (9) facing the front side.

3. Connection system according to claim 1 or 2, **characterized in that,** at its rear end region engaging in the receptacle (5), comprises a recess (14) in the circumferential surface as connecting means, in which recess engages a locking screw (15) which is screwed into a threaded bore (16) passing in particular radially through the wall of the clamping component (3).

4. Connection system according to any of the preceding claims, **characterized in that** the at least one locking element (13) is a ball (13) and the passage opening is formed as a radial through-hole (12) in the wall of the intermediate sleeve (9) having a diameter corresponding to the diameter of the ball (13), the wall thickness of the intermediate sleeve (9) in the region of the trough-hole (12) being smaller than the diameter of the ball (13), or **in that** the passage opening is formed as a radial through-hole (12) in the wall of the intermediate sleeve (9), into which two balls (13) are inserted one behind the other in the radial direction as locking elements which have a diameter corresponding to the diameter of the through-hole (12), the wall thickness of the intermediate sleeve (9) in the region of the through-hole (12) being smaller than the sum of the diameter of the two balls (13).

5. Connection system according to any of claims 1 to 3, **characterized in that** the locking element (13) is formed as a locking pin which is inserted into the radial passage opening from the outside.

6. Connection system according claim 5, **characterized in that** the locking pin (13) is inserted into the through-opening from the outside and the wall thickness of the intermediate sleeve (9) in the region of the through-opening is smaller than the length of the locking pin, or the passage opening is designed as threaded bore into which a locking element in the form of a threaded pin is screwed.

7. Connection system according to claim 5 or 6, **characterized in that** the recess (11) of the shaft is a Weldon-groove according to DIN 1835-1 and the end region of the locking pin (13) engaging with the recess (11) has a contour complementary to the Weldon-groove.

8. Connection system according to any of the preceding claims, **characterized in that** the end portion (15a) of the locking screw (15) engaging with the recess (14) of the intermediate sleeve (9) is formed to be pointed and/or the recess (14) of the intermediate sleeve (9) in which the locking screw (15) engages is formed as an annular groove extending along the circumference of the intermediate sleeve (9).

9. Connection system according to any of the preceding claims, **characterized in that** the recess (14) is formed complementary to the engaging end portion (15a) of the locking screw (15) such that the intermediate sleeve (9) is axially positioned in the receptacle (5) by the engagement between the locking screw (15) and the recess (14).

10. Connection system according to any of claims 1 to 7, **characterized in that** the recess (14) is formed locally on a partial section of the circumference of the intermediate sleeve (9) and complementary to the end portion (15a) of the locking screw (15) engaging with the recess (14), the recess (14) and the end portion (15a) of the locking screw (15) engaging therewith having in particular a circular cross-section.

11. Kit for use in a connection system according to any of the preceding claims with an intermediate sleeve (9) and a locking screw (15), **characterized in that** a passage opening (12) passing radially through the wall is formed in a sleeve body (9a) of the intermediate sleeve and connecting means (14) are formed at the rear end region of the sleeve body (9a) intended for insertion into a receptacle of a clamping tool for producing a positive connection with a clamping component (3), said connecting means (14) having a recess (14) for the engagement of a locking screw (15), wherein in particular the recess (14) is formed as an annular groove, which extends along the circumference of the cylindrical shaft (2) and **in that** the recess (14) of the intermediate sleeve (9) is formed complementary to the engaging end portion (15a) of the locking screw (15) in such a way that the intermediate sleeve (9) is axially positioned in a receptacle (5) by the engagement between the locking screw (15) and the recess (14) that the intermediate sleeve (9) is provided with parallel longitudinal slots (17) uniformly distributed along the circumference and the radial through-hole (12) and the passage opening is formed as a radial thorough-hole in the wall of the intermediate sleeve (a), wherein the radial through-hole (12) is placed in such a way, that it lies in the region of a longitudinal slot and is positioned in particular in such a way that the longitudinal slot (17) centrally divides the through-hole (12), and **in that** a circular-arc-shaped slot (18) is formed around and concentrically with the through-hole (12), which passes through the wall of the intermediate sleeve (9) from the outside inwardly so that spring bars (19) are defined between the circular-arc-shaped slot (18) and the through-hole (12), which spring bars (19) are elastically bent outwards when the a locking element (13) is inserted into the through-hole (12) from the outside in order to fix the locking element (13) in the through-hole (12) in a clamping manner by the elastic restoring force of the spring bars (19).

12. Kit according to claim 11, **characterized in that** the recess (14) is formed locally on section of the circumference of the intermediate sleeve (9) and complementary to the end portion (15a) of the locking screw (15) engaging the recess (14), said recess (14) and the end portion (15a) of the locking screw (15) engaging therewith having in particular a circular cross-section.

## Revendications

1. Système de connexion pour relier de manière amovible deux composants à un composant (1) à serrer - en particulier un outil - ayant une tige cylindrique (2), et un composant de serrage (3) comprenant un logement cylindrique (5) dans lequel la tige cylindrique (2) peut être serrée, la surface extérieure de la tige cylindrique (2) présentant au moins un évidement (11) avec lequel un élément de verrouillage (13) peut être mis en engagement, un manchon intermédiaire (9) du système de connexion pourvu de fentes longitudinales parallèles uniformément réparties sur la circonférence étant inséré dans le logement cylindrique (5) et la tige cylindrique (2) étant inséré dans le manchon intermédiaire (9), au moins un élément de verrouillage (13) étant positionné dans une ouverture de passage traversant la paroi du manchon intermédiaire (9), qui est formée comme un trou traversant radial (12) dans la paroi du manchon intermédiaire (9), et étant en engagement avec l'évidement (11) de la tige cylindrique (2), et le manchon intermédiaire (9) présentant, en particulier dans sa zone d'extrémité arrière s'engageant dans le logement (5), des moyens de connexion (15) par lesquels elle est reliée par complémentarité de forme au composant de serrage (3), **caractérisé en ce que** le trou traversant radial (12) est placé de telle manière, qu'il se trouve dans la zone d'une fente longitudinale, et est positionné en particulier de telle sorte que la fente longitudinale (17) divise le trou traversant (12) en son centre, et **en ce qu'**une fente (18) en forme d'arc de cercle est formée autour du trou traversant (12) et concentriquement à celui-ci, qui traverse la paroi du manchon intermédiaire (9) de l'extérieur vers l'intérieur, de sorte que, entre la fente (18) en forme d'arc de cercle et le trou traversant (12), des barrettes élastiques (19) sont définis qui, lorsque l'au moins un élément verrouillage (13) est introduit depuis l'extérieur dans le trou traversant (12), sont élastiquement replies vers l'extérieur afin de fixer l'élément de verrouillage (13) dans le trou traversant (12) par la force de rappel élastique des barrettes élastiques (19).

2. Système de connexion selon la revendication 1, **caractérisé en ce que** la fente en forme d'arc de cercle (18) s'étend sur sensiblement toute la circonférence du trou traversant (12), des barrettes de matériau (20) restant entre la fente longitudinale (17), dans la zone de laquelle est disposé le trou de traversant (12), et les extrémités de la fente en forme d'arc de cercle (18) sur le côté du manchon intermédiaire (9) tourné vers la face frontale.

3. Système de connexion selon la revendication 1 ou 2, **caractérisé en ce que,** dans sa zone d'extrémité arrière s'engageant dans le logement (5), présente un évidement (14) dans la surface circonférentielle comme moyen de connexion, dans lequel s'engage une vis de blocage (15) qui est vissée dans un alésage fileté (16) traversant en particulier radialement la paroi du composant du serrage (3).

4. Système de connexion selon l'une des revendications précédentes, **caractérisé en ce que** l'au moins un élément de verrouillage (13) est une bille (13) et l'ouverture de passage est formée comme un alésage radial traversant (12) dans la paroi du manchon intermédiaire (9) avec un diamètre correspondant au diamètre de la bille (13), l'épaisseur de la paroi du manchon intermédiaire (9) dans la région du trou traversant (12) étant inférieure au diamètre de la bille (13), ou **en ce que** l'ouverture de passage est conçue comme un trou traversant radial dans la paroi du manchon intermédiaire (9), dans lequel deux billes (13) sont insérées l'une derrière l'autre dans la direction radiale comme éléments de blocage, qui ont un diamètre correspondant au diamètre du trou traversant (12), l'épaisseur de la paroi du manchon intermédiaire (9) dans la zone du trou traversant (12) étant inférieure à la somme des diamètres des deux billes (13).

5. Système de connexion selon l'une des revendications 1 à 3, **caractérisé en ce que** l'élément de verrouillage (13) est conçue comme une goupille de verrouillage qui est insérée dans l'ouverture de passage radiale depuis l'extérieur.

6. Système de connexion selon la revendication 5, **caractérisé en ce que** la goupille de verrouillage (13) est introduite dans l'ouverture de passage depuis l'extérieur et l'épaisseur de la paroi du manchon intermédiaire (9) dans la zone de l'ouverture de passage est inférieure à la longueur de la goupille de verrouillage, ou l'ouverture de passage est conçue comme un alésage fileté, dans lequel un élément de verrouillage sous la forme d'une goupille filetée est vissé.

7. Système de connexion selon la revendication 5 ou 6, **caractérisé en ce que** l'évidement (11) de la tige est une rainure Weldon selon la norme DIN 1835-1 et la zone d'extrémité de la goupille de verrouillage (13) s'engageant dans l'évidement (11) a un contour complémentaire de la rainure Weldon.

8. Système de connexion selon l'une des revendications précédentes, **caractérisé en ce que** la partie d'extrémité (15a) de la vis de blocage (15) s'engageant dans l'évidement (14) du manchon intermédiaire (9) est formée de manière à être pointue et/ou l'évidement (14) du manchon intermédiaire (9) dans lequel s'engage la vis de blocage (15) est formé comme une rainure annulaire s'étendant le long de la circonférence du manchon intermédiaire (9).

9. Système de connexion selon l'une des revendications précédentes, **caractérisé en ce que** l'évidement (14) est formé de manière complémentaire à la partie d'extrémité (15a) de la vis de blocage (15) s'y engageante de telle sorte que le manchon intermédiaire (9) est positionnée axialement dans le logement (5) par l'engagement entre la vis de blocage (15) et l'évidement (14).

10. Système de connexion selon l'une des revendications 1 à 7, **caractérisé en ce que** l'évidement (14) est formé localement sur une section partielle de la circonférence du manchon intermédiaire (9) et complémentaire de la section d'extrémité (15a) de la vis de blocage (15) s'engageant dans l'évidement (14), l'évidement (14) et la section d'extrémité (15a) de la vis de blocage (15), qui s'engage dans celui-ci, ayant en particulier une section transversale circulaire.

11. Kit destiné à être utilisé dans un système de connexion selon l'une des revendications précédentes avec un manchon intermédiaire (9) et une vis de blocage (15), **caractérisé en ce qu'**une ouverture de passage (12) est formé dans un corps de manchon (9a) du manchon intermédiaire traversant radialement la paroi et des moyens de connexion (14) sont formés dans la zone d'extrémité arrière du corps de manchon (9a), destinés à être introduits dans un logement d'un outil de serrage pour réaliser une connexion par complémentarité de forme avec un composant de serrage (3), des moyens de connexion (14) présentant un évidement (14) pour l'engagement d'une vis de blocage (15), l'évidement (14) étant notamment réalisé sous la forme d'une rainure annulaire, qui s'étend sur la circonférence de la tige cylindrique (2) et que l'évidement (14) du manchon intermédiaire (9) est formé de manière complémentaire à la partie d'extrémité d'engagement (15a) de la vis de blocage (15) de telle sorte que le manchon intermédiaire (9) est positionné axialement dans un logement (5) par l'engagement entre la vis de blocage (15) et l'évidement (14), que le manchon intermédiaire (9) est pourvu de fentes longitudinales parallèles uniformément réparties sur la circonférence et l'ouverture de passage (12) est formée comme un trou traversant radial (12) dans la paroi du manchon intermédiaire (9), ou le trou traversant radial (12) est placé de telle manière, qu'il se trouve dans la zone d'une fente longitudinale, et est positionné en particulier de telle sorte que la fente longitudinale (17) divise le trou traversant (12) en son centre, et **en ce qu'**une fente (18) en forme d'arc de cercle est formée autour du trou traversant (12) et concentriquement à celui-ci, qui traverse la paroi du manchon intermédiaire (9) de l'extérieur vers l'intérieur, de sorte que, entre la fente (18) en forme d'arc de cercle et le trou traversant (12), des barrettes élastiques (19) sont définis qui, lorsque l'au moins un élément verrouillage (13) est introduit depuis l'extérieur dans le trou traversant (12), sont élastiquement replies vers l'extérieur afin de fixer l'élément de verrouillage (13) dans le trou traversant (12) par la force de rappel élastique des barrettes élastiques (19).

12. Kit selon la revendication 11, **caractérisé en ce que** l'évidement (14) est formé localement sur une partie de la circonférence du manchon intermédiaire (9) et complémentaire de la partie d'extrémité (15a) de la vis de blocage (15) qui s'engage dans l'évidement (14), l'évidement (14) et la partie d'extrémité (15a) de la vis de blocage (15), qui s'engage dans celui-ci, ayant en particulier une section transversale circulaire.
